# EUROPEAN PATENT APPLICATION

(11) **EP 4 481 367 A1**
(43) Date of publication of application: **25.12.2024**
(21) Application number: 23180050.9
(22) Date of filing: 19.06.2023
(51) Int. Cl.: G01N 21/05, G01N 21/15, G01N 21/53, G01N 21/85

(54) **OPACITY METER**

(71) Applicant: ATAL s.r.o., 39001 Tábor (CZ)
(72) Inventor: Horejsi, Josef, 39161 Oparany (CZ); Kotaska, Milan, 39133 Jistebnice (CZ); Freitag, Petr, 39155 Chynov (CZ); Chlada, Stanislav, 39155 Chynov (CZ); Mendl, Vladimir, 39001 Tabor (CZ)
(74) Representative: Sedlák, Jirí

(57) **Abstract**

The invented opacity meter is provided with means (6) for generating vacuum, which is connected to the outlet (3) of the measuring cuvette (1). The use of vacuum enables the installation of the sampling probe with a long gas line (4), which has a higher pneumatic resistance than the pressure of natural emissions from the exhaust of a vehicle. The invented opacity meter further includes the source (8) of compressed air for blowing out the long gas line (4) of the sampling probe with air to remove residues from the previous measurement.

## Description

### Field of the Invention

The invention relates to an opacity meter used to measure the emissions from combustion engines of vehicles.

### Background of the Invention

The opacity of the combustion engine is one of the parameters assessed in measuring emissions from combustion engines of vehicles. The measurement of the opacity makes it possible to verify, for example, whether the fuel mixture does not become contaminated during the combustion process, for example with oil from the oil bath of the combustion engine, as well as the functionality of solid particle filters of a vehicle, etc.

Opacity is determined by measuring opacity, which is the ability of substance to absorb light. The opacity scale lies between complete opacity and complete transparency. The measurement of opacity through the opacity-based method is based on the measurement of the optical attenuation of light passing through a column of measured emissions in a measuring cuvette.

Opacity meters used to measure the opacity include, in the basic design, a measuring cuvette to define the column of measured emissions. The measuring cuvette is pass-through for the supplied sample and, thus, it consists of an inlet for the supply of emissions samples and an outlet for the discharge of emissions samples. In addition, opacity meters in the basic design consist of a measuring system, which includes a light source, an incident light sensor, optical elements for optical modification of the light passing through the measuring cuvette, and a sampling electronic unit connected to the light source and to the incident light sensor for the generation of measurement data for subsequent evaluation. A sampling probe for the supply of emissions samples from the exhaust of a motor vehicle into a measuring cuvette is another integral part of the opacity meter. The sampling probe consists of a hose that is adapted at one end to be connected to the inlet of a measuring cuvette and closed at the other end by a sampling termination adapted for the insertion into the exhaust of a motor vehicle. The measuring cuvette and the sampling probe are equipped with heating system to prevent condensation of water vapours in the emissions samples. The evaluation of the measurement results usually takes place within the electronic control unit of the measuring system of the opacity meter.

During the measurement, the combustion engine changes from the idling speed to the cut-off speed with the accelerator at full-throttle, while the engine is loaded by its own inertial mass and the mass of the clutch and the gear in neutral.

An example of an opacity meter for measuring emissions from combustion engines can be the invention known from document US 6 570 655, the invention from document US 5 777 748, and, for example, the invention from document WO 2016/207186.

It is well known that the use of the above-mentioned opacity meters share common disadvantage, which is the short length of the sampling probe, as the emissions sample is driven into the measuring cuvette by overpressure caused by the blowing of emissions from the combustion engine. Therefore, increased total length of the sampling probe increases its pneumatic resistance and thereby its length is limited. This is particularly disadvantageous for large vehicles such as buses, when it is difficult to get the sampling probe into the exhaust and at the same time have the opacity meter connected to the sampling probe. Attempts to solve the problem of short sampling probe are known from practice by increasing the diameter of the sampling probe to reduce the pneumatic resistance, which is not problematic in terms of plugging into the exhaust in large vehicles. But even this approach is not advantageous, because the larger diameter of the sampling probe increases its weight and such sampling probe is difficult to handle.

Another problem of today's opacity meters used in measuring emissions from combustion engines of vehicles is that the emissions of today's combustion engines are many times lower than they used to be. Therefore, opacity meters must measure very little significant optical attenuation, which can be distorted by any contamination. In the case of long sampling probe, the risk of contamination is greater, because more residues of the previous measurement remain in the sampling probe after the measurement, not to mention the possibility of filling with water, which can degrade the measuring cuvette, for example, when the long sampling probe is raised to a height in handling.

In addition, opacity meters currently used do not have reliable control mechanisms to ensure that the opacity meter does not perform a blank measurement. It is not possible to rule out scenarios in which the operator clogs the sampling probe so that it does not collect a full sample and an incomplete sample or residues from the last measurement are involved in the measurement, thus allowing otherwise non-compliant vehicle to pass the test. A long sampling probe would help such a scenario as it may contain more residues from the previous measurement.

The object of the invention is to create an opacity meter for measuring emissions from combustion engines of vehicles, which would allow the use of a long sampling probe to supply the emissions sample to the measuring cuvette, without suffering any of the above-mentioned disadvantages, and which would further allow the cleaning of the measuring cuvette of the opacity meter, the cleaning of the long sampling probe as well as the detection of partial obstruction of the sampling probe.

### Summary of the Invention

The object is achieved by creating an opacity meter according to the invention below.

The opacity meter for measuring emissions from combustion engines of vehicles consists of a measuring cuvette, which has an inlet for the supply of the measured sample and an outlet for the discharge of the measured sample. The measuring cuvette forms the flowing sample into a column to perform standardized opacity measurement. At the same time, the opacity meter consists of a measuring system for measuring the opacity of the emissions sample located in the measuring cuvette. The measuring system emits a light beam into the emissions sample and simultaneously detects the light beam leaving the emissions sample, while processing the measured values. The last essential part of the opacity meter is the sampling probe for taking a measured sample of emissions from the combustion engine of the vehicle exhaust, while the sampling probe consists of a gas line, one end of which is connected to the inlet to the measuring cuvette and the other end of which is closed by a sampling termination for the insertion into the vehicle exhaust. The sampling probe collects a sample of emissions in the exhaust with its collecting termination, removing it to the measuring cuvette.

The summary of the invention is based on the means for creating vacuum connected to the outlet of the measuring cuvette. Generating vacuum downstream of the measuring cuvette from the point of view of the flow of the measured emissions sample brings the advantage that the sampling probe can have a higher pneumatic resistance without affecting the collection of the measured emissions sample. Since the opacity meter does not rely solely on the pressure of exhaust gases from the combustion engine, it is possible to extend the length of the sampling probe while maintaining its standard diameter. The invention can easily be used even for very large vehicles with combustion engine, while it is not complicated to measure vehicles with, for example, vertically oriented exhaust. Furthermore, it is advantageous that the generation of vacuum neither dilutes the emissions sample, nor cools down the emissions sample before the measurement of opacity.

Within the scope of the invention, the extended version of the opacity meter is preferred, in which a multi-way valve is installed between the inlet of the measuring cuvette and the gas line connected to the inlet of the measuring cuvette, while one of the paths of the multi-way valve is free for the intake of ambient air. The multi-way valve allows the measuring cuvette to be temporarily disconnected from the sampling probe and the measuring cuvette will be blown out with air due to vacuum, thus getting rid of residues. Blowing out the measuring cuvette reduces the error of the following measurement, which is important, as the emissions of combustion engines of vehicles are currently reduced to such a degree that even small residues that could have been neglected years ago have a great influence on the measurement performed.

Within the scope of the invention, another embodiment of the opacity meter is preferred, which, in addition to the main idea of the invention, includes the fact that one of the paths of the multi-way valve, or that the gas line of the sampling probe connected to the multi-way valve, is connected to the closing source of compressed air. The source of compressed air will allow the sampling probe to be blown while the measuring cuvette is disconnected by the multi-way valve. Residues of the previous measurement as well as, for example, condensed water, are blown out of the sampling probe.

It is preferred if the measuring cuvette is equipped with a pressure sensor. The pressure sensor can detect if sufficient emissions sample comes into the measuring cuvette. This makes it possible to evaluate both intentional and unintentional damage to the sampling probe, and the resulting effect on the measurement results.

It is also advantageous if the source of compressed air is equipped with its own pressure sensor. By comparing the actual measured pressure with the design pressure, the permeability of the sampling probe can be verified. In this way, it is possible to eliminate attempts to affect the measurement by obstructing the sampling probe, but also to verify that water has not condensed in the sampling probe, or that when the end of the sampling probe has been inserted into the exhaust, it was not immersed in condensed water in the exhaust.

The main benefit of the invented opacity meter is the long sampling probe, which makes it possible to operate safely and conveniently large vehicles with combustion engines without affecting the reliability of the measurement. Last but not least, it is advantageous that there is no danger of flooding the measuring cuvette with condensed water.

### Explanation of drawings

The present invention will be explained in detail by means of the following figures where:

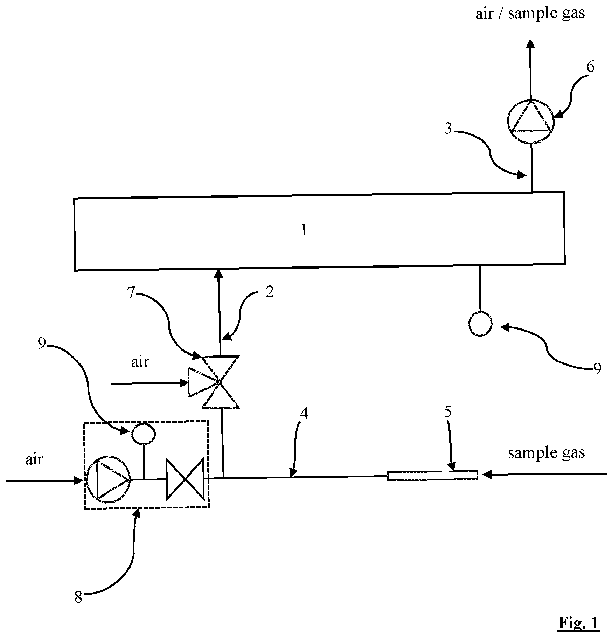

Fig. 1 shows a scheme of the opacity meter according to the invention.

### Example of the invention embodiments

It shall be understood that the specific cases of the invention embodiments described and depicted below are provided for illustration only and do not limit the invention to the examples provided here. Those skilled in the art will find or, based on routine experiment, will be able to provide a greater or lesser number of equivalents to the specific embodiments of the invention which are described here.

The invented opacity meter is schematically shown in Fig. 1. The measuring cuvette 1 is basically a flow-through vessel. The measuring cuvette 1 has the inlet 2 for the supply of the emissions sample and the outlet 3 for the discharge of the emissions sample. The number of inlets 2 and outlets 1 is not limited in any way, if the outlets 1 are fitted with the means 6 for generating vacuum.

The description of the measuring system fitted to the measuring cuvette 1 is not relevant from the point of view of the summary of the invention. The person skilled in the art can use any known measuring system of the existing opacity meters. The same fact applies to the heating system of the measuring cuvette 1.

The sampling probe consists of a gas line 4 and a sampling termination 5 made of material resistant to the environment prevailing inside the vehicle exhaust during the test. The gas line 4 is insulated and equipped with the heating system. The insulation and the heating system of the sampling probe are not important from the point of view of the summary of the invention. The person skilled in the art can use any known insulation and heating system of the existing sampling probes of opacity meters.

The gas line 4 of the sampling probe was subjected to practical testing up to the length of 10 m, with the measurement results consistent with the reference measurement using the opacity meter with the sampling probe with a standard length of 2 meters.

The means 6 for generating vacuum refers to a fan, a pressure pump, etc., simply any practically suitable device generating vacuum in the gaseous environment. The magnitude of the generated vacuum combined with the pressure of emissions in the exhaust must overcome the pneumatic resistance of the sampling probe.

Furthermore, the multi-way valve 7 is shown in the illustrated opacity meter in Fig. 1. The multi-way valve 7 either leaves the passage of the emissions sample from the sampling probe to the measuring cuvette 1 open, or in the event of interval between measurements, opens the free passage from the surrounding environment to the measuring cuvette 1, which is blown out with air from the surrounding environment due to vacuum.

In non-illustrated example of the invention embodiment, one of the paths of the multi-way valve 7 can be connected to the source 8 of compressed air. The multi-way valve 7 can open the path for pressurized air from the source of compressed air 8 to the sampling probe to blow it with air (blow-out) before the measurement of emissions.

The illustrated example of the invention embodiments in Fig. 1 shows an alternative embodiment, in which the source 8 of compressed air is connected to the gas line 4 of the sampling probe upstream of the multi-way valve 7. In this way, the blowing of the measuring cuvette 1 by sucking air from the surrounding environment through the multi-way valve 7 and the blowing of the sampling probe with compressed air from the source 8 of compressed air can take place simultaneously.

The source 8 of compressed air can be closed so that it cannot affect the measurement of opacity. The source 8 of compressed air is, for example, a diaphragm pump or a pressure bottle, etc. An expert will design various types and sizes of the sources 8 of compressed air without much effort.

In the illustrated example of the invention embodiments, the measuring cuvette 1 is equipped with a pressure sensor 9, which measures the instantaneous pressure in the measuring cuvette 1. This is used to check the opacity meter during the measurement, namely its supply with the emissions sample.

The source of compressed air 8 is also provided with its own pressure sensor 9 in the illustrated embodiment with parameters dimensioned as needed, than is the case with the pressure sensor 9 of the measuring cuvette 1. When the sensor 9 of the source 8 measures pressure higher than the design pressure for normally passing sampling probe, it means that the sampling probe is obstructed, thus preventing the start of invalid measurement.

### Industrial applicability

The opacity meter according to the invention finds its application in the measurement of emissions of vehicles with combustion engines, in particular during regular technical inspections of these vehicles.

### List of reference numerals

- 1: measuring cuvette
- 2: inlet of the measuring cuvette
- 3: outlet of the measuring cuvette
- 4: gas line of the sampling probe
- 5: sampling termination of the sampling probe
- 6: means for generating vacuum
- 7: multi-way valve
- 8: closing source of compressed air
- 9: pressure sensor

## Claims

1. An opacity meter for measuring emissions from combustion engines of vehicles consisting of a measuring cuvette (1) having an inlet (2) to introduce the measured sample and an outlet (3) to remove the measured sample, further consisting of a measuring system for measuring the opacity of the measured sample located inside the measuring cuvette (1), and further consisting of a sampling probe for taking the measured sample from the vehicle exhaust, while the sampling probe consists of a gas line (4), with one end connected to the inlet (2) of the measuring cuvette (1) and the other end closed by a sampling termination (5) for the insertion into the vehicle exhaust, **characterized in that** the means (6) for generating vacuum is connected to the outlet (3) of the measuring cuvette (1) with a constant flow of the measured sample through the measuring cuvette.

2. The opacity meter according to claim 1, **characterized in that** the multi-way valve (7) is inserted between the inlet (2) of the measuring cuvette (1) and the gas line (4) of the sampling probe connected to the inlet, while one of the paths of the multi-way valve (7) is free for intake of ambient air.

3. The opacity meter according to claim 2, **characterized in that** one of the paths of the multi-way valve (7), or the gas line (4) of the sampling probe connected to the multi-way valve (7), is connected to the closing source (8) of compressed air.

4. The opacity meter according to any of claims 1 to 3, **characterized in that** the measuring cuvette (1) is equipped with the pressure sensor (9).

5. The opacity meter according to claim 3 or 4, **characterized in that** the source (8) of compressed air is equipped with the pressure sensor (9).
